# EUROPEAN PATENT APPLICATION

(11) **EP 2 672 720 A1**
(43) Date of publication of application: **11.12.2013**
(21) Application number: 12741637.8
(22) Date of filing: 02.02.2012
(51) Int. Cl.: H04N 21/234, H04N 7/26

(54) **SYSTEM FOR GENERATING SYNTHETIC DIGITAL TELEVISION CHANNELS**

(30) Priority: 03.02.2011 ES 201130142
(71) Applicant: Universidade Da Coruña, 15071 A Coruña (ES)
(72) Inventor: GULIAS FERNANDEZ, Victor Manuel, 15071 A Coruña (ES); TAIBO PENA, Javier, 15071 A Coruña (ES); BARREIRO PAZ, Miguel, 15071 A Coruña (ES); MONTERO MANSO, Pablo, 15071 A Coruña (ES)
(74) Representative: Carvajal y Urquijo, Isabel
(86) International application number: PCT/ES2012/070067
(87) International publication number: WO 2012/104466

(57) **Abstract**

Synthetic digital television channel generation system that comprises a control system (1) that manages the generation of synthetic digital television channels (41); a synthetic video generation cluster (2) that generates frames and codes them to digital video in real time based on the orders (21) received from the client module (4), wraps the frames, and transmits the obtained coded elemental video stream (23) to a television distribution platform (3); the television distribution platform (3) that receives and transforms the coded elemental video stream (23) to the physical means of broadcasting used by the synthetic digital television channels (41) in their communication with the client module (4); a client module (4) that interacts with the user sending orders (21) to the system and receives and decodes the synthetic digital television channels (41).

## Description

### Field of the invention

The present invention belongs to the field of digital communications.

### State of the art

The majority of digital television terminals (set-top boxes) incorporate specialized hardware for decoding video streams. However, their computing power is insufficient for other tasks, due to design requirements (low cost, reduced energy consumption, etc.). On the other hand, users have become familiarized with applications based on complex displays, such as the creation of synthetic scenes in virtual worlds using 2D/3D acceleration; these applications do not appear to be viable in real digital television environments: the increase in the capacity of the terminals to approach these requirements in terms of graphic processing power seems to be impossible due to its cost.

A trivial solution would comprise the use of a hardware coder to code the digital video output (such as DVI, HDMI, or SDI) of a computer executing a complex display application. However, this solution fails to be scale-appropriate or cost-effective, taking into account the orientation of the service for thousands of simultaneous users.

One of the alternatives to mitigate this problem is to use the computing power of the CPU (Central Processing Unit) of modern computers to carry out the execution of the application (generation of each decompressed frame) and the coding by means of software of these frames in real time. In this case, scalability can be achieved by means of the distribution of the execution of the application and the software coding in a cluster of computers, provided that individual services remain (and most of the time they are) independent from each other. Even though this software coding solution allows each node to execute and code several applications simultaneously, the capacity of the CPU is a bottleneck given that real-time coding is an expensive application in terms of computing resources, as are the applications that generate complex interactive synthetic content.

Therefore, a system that solves the problems and limitations of the current state of the art is desirable.

### Description of the invention

The objective of the present invention is the generation of multiple synthetic videos in real time (including content in high-definition, 1080p, or higher), their coding and adaptation to the format used by the terminals of the digital television user to service numerous users, in addition to a reduction of the cost per channel.

To achieve the foregoing, the present invention generates sequences of synthetic video and delivers them to the user terminals using the digital television network in the appropriate format (digital video, normally MPEG-2 or H.264) wrapped in MPEG transport streams (according to standard ISO/IEC 13818-1) or RTP (according to standard IETF RFC 3550). The terminal receives these contents and decodes them in the same manner than with other content broadcast or on-demand channels. That is to say, the system developed in this invention is conceived to operate in a transparent manner with terminals currently available for digital TV users.

The system being proposed comprises four main blocks:
a) Control System
b) Synthetic Video Generation Cluster
c) Television Distribution Platform
d) Client Module

### a) Control System

The Control System comprises the following components:

### a.1) Admission Desk

The Admission Desk is in charge of receiving the requests for new services or reconnections, from the client in a specific transport protocol (for example, XML on HTTP), transforming the requests into the internal communications format managed by the Control System, and directing them to the Admission Manager.

The identity of the client (for example, its physical address in the operator network), and the service requested (for example, a specific application), among others, are included in the information provided to the Admission Desk.

It constitutes an abstraction layer that decouples the Client from the Control System, enabling the use of different transport protocols and mechanisms without affecting the rest of the system.

### a.2) Admission Manager

The Admission Manager is in charge of managing requests of new synthetic digital television channels or reconnections by using the internal communications protocol of the Control System. To achieve the foregoing, the Admission Manager communicates with: (i) the Authorization and Accounting Manager, to verify if the client has access to the requested synthetic digital television channel and to register its use for accounting and subsequent billing purposes; (ii) the Resource Manager, to reserve the necessary resources to serve the application specified by the client; (iii) the Session Manager, to create a new session for the client with the allocation of reserved resources or to locate a previously created session in a reconnection attempt.

### a.3) Authorization and Accounting Manager

The Authorization and Accounting Manager is in charge of user authentications and authorizations, based on previously defined criteria (for example, associations between clients and authorized services), and the registration of new authorized and denied services.

### a.4) Resource Manager

The Resource Manager is in charge of managing the resources necessary for the creation of a new synthetic digital television channel. The resources are divided into two groups: (i) Channels (Cₙ), representing a specific television channel used by the Television Distribution Platform (for example, a specific frequency in the spectrum), plus the information necessary to associate the specific television channel with the Synthetic Video Generation Cluster (for example, UDP address to which the IP video associated with a specific television channel is sent), and (ii) Process Units (PUₙ), representing the necessary computing resources to execute the application (a multidimensional value including CPU, GPU, and memory capacity).

### a.5) Session Manager

The Session Manager is in charge of launching and supervising the Synthetic Video Generation Application (SVGA) and to release the resources allocated to the same after completing its execution (either normally or abnormally) accordingly.

One of the necessary resources is the physical location wherein the specific application is to be executed.

**The admission flow of a new service** is the following:
1. A launch client requests the creation of a new service to the Admission Desk, providing its identity and the specific application to be launched.
2. The Admission Desk converts the request made in the previous point into the internal communications format of the Control System and redirects the request to the Admission Manager.
3. The Admission Manager requests the authorization of the Authorization and Accounting Manager.
4. The Authorization and Accounting Manager verifies if the user has access to the requested application at that time and registers its decision.
5. If the Authorization and Accounting Manager does not authorize the service requested by the client, the Admission Manager prepares a negative answer to the request. Jump to 11.
5. The Admission Manager requests the necessary resources from the Resource Manager to launch the application.
6. The Resource Manager verifies the availability of the necessary resources to execute the service, in which case it reserves and returns them as part of an affirmative answer. If they are not available, the Resource Manager denies the request without blocking resources.
7. If the Resource Manager denies the request for not being able to reserve the necessary resources, the Admission Manager prepares a negative answer to the request. Jump to 11.
8. The Admission Manager requests the launch of a specific Synthetic Video Generation Application (SVGA) with the reserved resources from the Session Manager.
9. The Session Manager creates a new session, allocating a communication port to the client in the destination node, launching a new instance of the specific application therein, and returning the session identifier and the communication port to be used to the Admission Manager.
10. The Admission Manager prepares a positive response to the request for the new service including, among others, the session identifier and the communication port.
11. The Admission Manager sends the response to the Admission Desk.
12. The Admission Desk transforms the response of the Admission Manager according to the supported external communications protocol (for example, XML in the body of an HTTP response), and returns it to the launch client.

### b) Synthetic Video Generation Cluster

The Synthetic Video Generation Cluster comprises a set of processing nodes interconnected to one another, and to the Control System, and to the TV Distribution Platform by means of a data network.

Each node in the Synthetic Video Generation Cluster comprises a general purpose computer formed by one or more central processing units (CPU) and one or more graphic processing units (GPU).

Multiple instances of Synthetic Video Generation Applications (SVGA) are executed in each node of the Synthetic Video Generation Cluster. Each one of them will correspond to an existent active session.

Each SVGA comprises several components executed in the node, some of which are executed in CPU and others in GPU.

### b.1) Control System Interaction Controller

The Control System Interaction Controller is in charge of the communications between the Session Manager of the Control System and the SVGA. The responsibility of the component is the startup, availability, and controlled termination of the SVGA. This component is executed in the CPU.

### b.2) Client Communication Port Controller

The Client Communication Port Controller of the SVGA is in charge of the communications with the Synthetic Video Client (SVC). The responsibility of the component is the definition of a reliable SVGA-CVS communication channel (for example, a TCP/IP connection) on which (synchronous and asynchronous) orders are broadcasted from the SVC to the SVGA and (synchronous and asynchronous) events are broadcasted from the SVGA to the SVC. This component is executed in the CPU.

### b.3) Video Stream Wrapper

The Video Stream Wrapper is in charge of wrapping the elemental video streams coded by the GPU coder and sent through the SVGA-TV Distribution Platform communication channel (for example, UDP packages) to the TV Distribution Platform. This component is executed in the CPU.

### b.4) Specific Logic of the SVGA

The Specific Logic of the SVGA is in charge of defining, in real time, based, among others, on the interaction with the SVC (for example, key pressing orders in a remote control in the SVC), the drawing orders (by means of a low-level graphic API, such as OpenGL or Direct3D), based on which the frame renderer generates the synthetic video service frames for the session associated with the SVGA. This component is executed in the CPU and acts as an interface with the components executed in the GPU (Frame Renderer). The communication with the Frame Renderer is carried out through a low-level graphic API (Application Programming Interface) such as OpenGL or Direct3D, through which the drawing orders generated by each video frame are sent to the GPU.

### b.5) Frame Renderer

The Frame Renderer is in charge of generating, in real time, based on a series of drawing orders provided by the Specific Logic of the SVGA (through a low-level graphic API such as OpenGL or Direct3D), the non-coded frames of the synthetic video service. The specific graphic processing capacities of the GPUs are used in this generation.

### b.6) Video Coder

The Video Coder is in charge of generating the compressed elemental video streams with an appropriate format for the TV Distribution Platform based on the non-coded frames generated in real time by the Frame Renderer. This component is deployed in its majority in the GPU (Block Coder), and final process is carried out in the CPU (Frame Composer).

### b.6.1) Block Coder

The Block Coder subsystem is executed in the GPUs of the nodes of the Synthetic Video Generation Cluster. This coder is implemented in a parallel computing language in GPU, such as OpenCL or CUDA (Computer Unified Device Architecture), and is in charge of coding the blocks of pixels of the frames generated in the GPU itself in real time and according to any of the standards allowed by the terminals used by the client. The system described in this invention supports the following standards: MPEG-2 (ISO/IEC 13818-2), H.263 (ITU-T H.263) and H.264/MPEG-4 part 10 (ISO 14496-10).

Even though there are GPU-based video coder implementations, in these cases the GPU is only used to carry out certain coding tasks and/or they are carried out on the decompressed frames loaded from the main memory. The system proposed in the present invention codes the contents generated directly in GPU in the GPU itself. This means that transferring the contents from the main memory of the system through the bus connecting the GPU to the CPU is not necessary, which would suppose a bottleneck for the system. The rendering operations (generation of synthetic images) and the coding are carried out inside the GPU in their entirety, and the intermediate results are stored in the GPU video memory. This avoids the transfer of information through the bus connecting the GPU to the rest of the system, with the exception of the final result: the coded blocks of pixels.

### b.6.1.1) Coding of an "intra" frame (I-frame)

The coding carried out in this subsystem takes into account the frame divided into groups of nxn pixels, known as blocks. On the other hand, it also takes into account that the frame consists of a luminance component (Y) and two chrominance components (U and V). This division, both into blocks and into components, is carried out as defined in the video standard being used in terms of pixel depth (number of bits dedicated to each component) or the size of the block. The operations described below likewise apply to the three components (Y, U, and V) due to which any process on a block of pixels will be carried out on each of its three components.

The luminance components (Y), the chrominance components (U and V), and the blocks of nxn pixels can be managed independently from one another, allowing parallelism. The coding of these blocks of nxn pixels is executed in independent computing threads to carry out the operations composing the video coding: color space conversion (RGB to YUV), discrete cosine transformation, quantization, reordering of quantized coefficients, and the calculation of the series of consecutive repetition of the coefficients and coding of the pairs formed by each coefficient and their consecutive repetitions in a compressed representation by means of a lossless compression algorithm (such as Huffman, CABAC, or CAVLC). As mentioned above, in order to maximize parallelism, and therefore, performance, the discrete cosine transformation and the quantization, as well as the inverses of both, are calculated by a plurality of threads for each block of nxn pixels of the frame. The result of this calculation is aimed at the reordering of coefficients in the order defined by the video standard.

### b.6.1.2) Parallelization of the reordering of coefficients and calculation of run-level pairs.

As described above, the processing of each block of nxn pixels is distributed in a plurality of executing threads. However, the task of reordering the coefficients and calculate the run-level pairs is an inherently sequential process, given that the quantized results of the discrete cosine transformation are accessed in an order predefined by the video standard. One of the contributions of this invention is an alternative calculation method that parallelizes the sequential path of the reordering to improve the global performance of the system.

In the quantized coefficient reordering step, each block of nxn pixels is processed in parallel by several executing threads within the GPU. The system proposed by this invention takes advantage of this thread configuration to optimize performance. The quantized coefficients of each block are divided according to the path order defined by the video standard, in as many sections of adjacent coefficients as there are executing threads processing the block of nxn pixels. In order to eliminate the dependence between these sections and process them in parallel, in a first phase, each thread calculates the final repetition of that section, that is to say, the number of adjacent zero-value coefficient present at the end of the section. These final repetition values for each section are stored in a memory buffer accessible by all the threads.

Using the result of the final repetition, the initial repetition of each section as the number of consecutive zero-value coefficients found immediately prior to each previously analyzed section, is calculated. For each section, this value will be the final repetition of the immediately preceding section, except when this value is equal to the number of coefficients per section (that is to say, the entire section would be composed of zeroes), in which case the final repetition values of the preceding sections are accumulated or added until reaching one which final repetition value is lower than the number of coefficients per section, or when the first section is reached. The accumulation or sum of the final repetition values of the preceding sections, until reaching one of the specified stop conditions, will constitute the repetition associated with every quantized coefficient of each section.

After obtaining the repetition, the threads are able to calculate the (run-level) pairs of that section in parallel. These pairs are coded by means of the algorithm defined in the video standard being used (for example, Huffman codes in MPEG-2). This lossless coding is carried out based on a table, where the pre-calculated codes for the (run-level) pairs are stored in the GPU memory.

### b.6.1.3) Predictive frame (P-frame) coding and estimation of movement using high-level information in the GPU.

In the case of frames coded in a predictive manner (P-frames), the operations described above for the intra frames (I-frames) are carried out, except for the operation of the discrete cosine transformation, which is not applied to the Y, U, and V components of the pixels of the frame, but to the differences between that frame and the immediately preceding frame after applying the movement compensation. This movement compensation moves the blocks of the frame using the vectors of movement calculated in the movement estimation operations. The vectors of movement are calculated per pixel to subsequently carry out a convolution of the pixels of the block, thus obtaining the necessary vector of movement per block for the video coding standards used in the set-top boxes.

The movement estimation is one of the most expensive tasks in the coding process, which is significantly accelerated in this invention using high-level information about the frame to be coded, coming from the application generating the content in the GPU. This is another of the important advantages of carrying out all the operations inside the GPU.

Given that the SVGA has the entire information of the state of the virtual scene at every moment in time, the position of a point in the frame and the position of that same point in the previous frame can be calculated by rendering the geometrical models. The vector of movement for said point is obtained by finding the difference between them.

This operation to calculate the position of a point in the frame and the position of that same point in the previous frame is carried out by the Frame Renderer, in addition to the rendering itself. In the first place, a vector of movement is calculated for each vertex of the geometry in a per vertex program (vertex shader), and then, the values per vertex for all the pixels of the visible surfaces in the frame are interpolated in a per pixel program (fragment shader).

The typical calculation in the per vertex program consists in multiplying the position of the vertex in object space by the model, view, and projection matrixes, such that the position of the vertex in clip space is obtained. In this case, in addition to the view and projection model of the current frame, the matrixes of the preceding frame are saved. In addition, the subsequent transformations of the vertex are carried out from coordinates in clip space towards the coordinates of the screen (in pixels). All these transformations are carried out for the position in the current frame and in the preceding frame. The difference between both positions (in screen space) constitutes the vector of movement for the vertex.

There are special cases wherein calculating the vector of movement is not possible: when an element was not visible in the preceding frame, either because it just entered the frame, or it was uncovered by the rotation of the object itself, or it was hidden by another element located in front of it. However, in the majority of the cases, an excellent approximation is obtained at a very low cost within the rendering and coding process.

The values per pixel are calculated based on the values per vertex, carrying out a perspective-correct interpolation. This task is carried out by the GPU during the raster and provides it to the per pixel program, which is in charge of storing the vectors of movement per pixel in a GPU memory buffer such that they are available for the video coder.

The movement compensation is carried out by blocks of pixels, such that the vectors per pixel calculated together with the render of the scene are convoluted in a subsequent task within the Block Coder to obtain the vectors of movement per block, which will be subsequently used to calculate the differences between the compensated frame and the preceding frame.

This difference is injected into the phase of the coding process that calculates the discrete cosine transformation and continues in the subsequent tasks, as described above.

### b.6.1.4) Block Coder Result

The output of the Block Coder consists of the bit chains corresponding to the coded frame blocks, including the vectors of movement in the case of predictive frames (P-frames). These chains are stored in the GPU global memory and are accessed by the Frame Composer subsystem from the CPU to build the coded video frame.

### b.6.2) Frame Composer

The Frame Composer is in charge of obtaining the bit streams generated by the Block Coder for each block of pixels and assembling them by adding the necessary headends to build the coded elemental video stream frames to be delivered to the Video Stream Wrapper.

The **initialization and termination flow of the SVGA** is the following:
1. The Session Manager, at the request of the Admission Manager and after authorizing and reserving the resources, decides to launch an SVGA.
2. The SVGA is launched in the node selected from the Synthetic Video Generation Cluster, configured with the previously reserved resources, among which we have the communication port with the SVC and the data network port to which the generated video is to be sent.
3. During the initialization of the SVGA, the Communication Port Controller with the Client waits for the connection to the SVC.
4. If the connection is successful, the SVGA will begin interacting with the SVC and generating synthetic video. Otherwise (SVC is not able to connect after a while), the SVGA terminates its execution, and with it, the session, releasing the allocated resources.
5. If the connection between the communication ports of the SVGA and the SVC is broken after the generation of synthetic video begins, the SVGA will terminate its execution, and with it, the session, releasing the allocated resources.

The **synthetic video generation flow** is the following:
1. Before a stimulus (such as, for example, a command coming from the SVC or an internal temporization), the specific logic of the SVGA updates the status of the virtual scene to synthetize the following frame correctly.
2. The Specific Logic of the SVGA delivers the drawing orders (through an API such as OpenGL or Direct3D) to the Frame Renderer.
3. The Frame Renderer generates a frame in the GPU internal memory. In the case of predictive coding (P-frame), it also generates the vectors of movement per pixel in the GPU internal memory.
4. Based on the rough (uncompressed) frame generated in the GPU internal memory, the Video Coder codes and compresses the frame with an appropriate format for the TV distribution platform. In the case of a frame compressed in a predictive manner, the vectors of movement and the information of the preceding frame are also used in this coding and compression process. This coding process is detailed in the section "operating flow for the generation and coding of frames in GPU".
5. The Video Coder delivers the compressed video to the Video Stream Wrapper.
6. The Video Stream Wrapper wraps the coded elemental video, multiplexing it with other synchronous streams (digital audio, for example), and fragments into in packages delivered on a data network to the TV Distribution Platform.
7. The TV Distribution Platform transforms the digital video on the data network (for example, video on UDP) in the necessary physical means for its broadcast to the SVC (for example, QAM modulation according to the DVB-C standard in a specific TV service).

The **operating flow for the generation and coding of frames in GPU** is the following:
1. The Specific Logic of the SVGA establishes the status of the virtual scene and sends the drawing orders to the Frame Renderer using a low-level graphic API (such as OpenGL or Direct3D). The GPU generates the frame based on these drawing orders. This frame is not sent to the graphic output of the GPU, as would be usual in an interactive 3D application which output is shown on screen, but to an internal GPU memory buffer.
   The coder is able to generate two types of codified frames: "intra" (I-frame) and predictive (P-frame), defined in the aforementioned video coding standards. Given the orientation of the invention towards interactive applications through digital TV, minimizing the response time to the user is an essential objective. "Intra" frames (I-frames) and predictive frames (P-frames) are only coded for this reason. The use of bidirectional predictive frames (B-frames) is ruled out because they would increase the latency of the system, given that the coder needs to delay the calculation of vectors of movement in at least one frame to be able to take references in the past and in the future.
   The selection of the frame type to be coded is carried out based on two conditions:
   - With the indication of the Specific Logic of the SVGA, which can notify a substantial change in the content of the scene.
   - Periodically according to the video format requirement, inserting "intra" frames to avoid the excessive degradation of the image.
2. In the case of predictive frames (P-frames), in addition to generating the visible image of the video (color buffer), the Frame Renderer calculates the vectors of movement (optical flow between the previous frame and the current one) and stores them in another GPU memory buffer. The vectors of movement are calculated in the same rendering pass than the color buffer of the frame, due to which a vector of movement is obtained for each pixel of the frame. This calculation is implemented in a series of per vertex and per pixel programs executed by the GPU, as described above.
   A series of calculation kernels using the processing units of the GPU are launched at this point to process groups of pixels within each block of the frame in a parallel manner. This parallelism allows obtaining a high-speed coding, which is critical to achieve the main objective of this invention: coding the highest number of synthetic image channels, such that the cost per channel is reduced. The following operations (3-11) will be carried out distributed between several executing threads for each block of the frame:
3. The Video Coder accesses the pixels of the block of the frame and carries out the RGB color space conversion (wherein the GPU generates the frame) and YUV (the one used by the coded video).
   If an "intra" frame (I-frame) is being coded, we jump to step 6.
4. A convolution operation to obtain the vectors of movement per group of pixels is carried out based on the vectors of movement (per pixel) calculated in step 2, as defined in the video format being used (a vector of movement by block, macroblock, or sub-block).
5. The vectors of movement obtained in the previous step are used to carry out the compensation of movement on the buffer stored in step 9 of the previous frame. The difference between the pixels of the preceding frame, displaced in groups with the vectors of movement (from the preceding frame to the current one), and the pixels of the current frame converted into YUV space (result from step 3), is calculated. This difference between both frames is taken as the values to which the discrete cosine transformation will be applied.
6. The discrete cosine transformation is calculated on the blocks of pixels in the YUV space (in the case of "intra" frames", or the differences calculated in step 5, to obtain a real coefficient matrix for each block.
7. The real coefficient matrix of a block is quantized by dividing these coefficients by a value known as quantizer. Decimals are discarded, preserving the whole part of these quantized coefficients. The quantization value is initialized by the Specific Logic of the SVGA, and is dynamically adjusted by the Frame Composer to maintain the bit rate within the limits admitted by the implementation method.
8. The inverse operation is carried out on the coefficients quantized in the previous step, in the same manner as the video decoder in the client.
9. The inverse discrete cosine transformation is applied to the result of the previous step, such that the frame to be obtained by the video decoder in the client is obtained. This decoded frame is stored in the GPU memory to calculate the differences when coding the following predictive frame (P-frame).
10. The matrix of whole quantized coefficients is accessed in an order determined by the path sequence defined in the implementation method. The run-level coding is carried out during this sequential path. This task is exclusively sequential within a block, given that it is carried out in the order predefined by the path sequence and the calculation is accumulative (the final value is calculated in an iterative manner based on the value obtained in the previous pixel). This invention defines a method to carry out this task in a partially parallel manner, which optimizes the performance of the calculation.
11. The sequence of run-level value pairs, calculated for each block of pixels, is coded by means of the lossless compression algorithm corresponding to the implementation method (such as Huffman, CABAC, or CAVLC). To accelerate this process, in some cases (such as Huffman), the codes are pre-calculated and stored in the GPU memory in a two-dimensional table (using "run" and "level" as coordinates to access the symbols of the table). The result of this phase is the bit sequence that corresponds to the compressed block. These sequences are stored in the GPU global memory, such that it can be accessed directly from the GPU or transmitted to the main memory of the computer to be accessed from the CPU.
12. The bit sequence of each block of pixels is transmitted to the main memory of the computer, where the Frame Composer module, deployed in the CPU, reads them to assembly the frame, adding the relevant headends and adhering to the coded elemental video format supplied to the Video Stream Wrapper.

### c) TV Distribution Platform

The TV Distribution Platform is the component in charge of converting the digital video generated by the SVGA of the Synthetic Video Generation Cluster, delivered in the SVGA-Television Distribution Platform (for example, video on UDP) communication channel, in the necessary physical means for its broadcast to the SVC (for example, QAM modulation according to the DVB-C standard in a specific TV service).

Each partnership between a specific address of the data network of the TV Distribution Platform (for example, the UDP port receiving the digital video) and a specific TV service (for example, specific frequency and program identifiers) define each one of the channels managed by the Resource Manager exclusively allocated to a session serving an SVC.

### d) Client Module

The Client Module block, in contact with the user of the system, is composed of two components:

### d.1) Synthetic Video Launch (SVL)

The Synthetic Video Launch (SVL) is the component of the Client Module in charge of interacting with the Admission Desk of the Control System, using the protocol specified for the same, to request the creation of a new Synthetic Video Generation Service, and then launching the SVC with the session information provided in the response from the Control System.

### d.2) Synthetic Video Client (SVC)

The Synthetic Video Client is the client component in charge of interacting with the SVGA to define the synthetic video stream in an interactive manner and to present the TV service received from the TV Distribution Platform to the user.

The SVC includes an SVGA communication port controller, which acts as a peer of the SVGA client communication port. The responsibility of the component is the definition of a reliable SVGA-CVS communication channel (for example, a TCP/IP connection) on which (synchronous and asynchronous) orders are broadcasted from the SVC to the SVGA and (synchronous and asynchronous) events are broadcasted from the SVGA to the SVC.

The logic of the SVC (for example, an interactive application of a set-top box), generates orders that are sent to the SVGA (for example, pressing a remote control) and reacts before events generated by the SVGA (for example, the termination of the application).

The reception of the TV service from the TV Distribution Platform is not necessary carried out using the same channel than in the interaction with the SVGA. It is carried out using a decoder appropriate for the TV distribution platform (for example, a DVB-C tuner and decoder).

The **initialization and termination flow of a synthetic video service from the point of view of the client** is the following:
1. The SVL is being executed. Typically, it offers different available services to the user.
2. The user will select one of the services available within the SVL.
3. Using the protocol of the Admission Desk, the SVL requests the creation of a new service from the Control System. The identity of the user and the application required are found in the information included in the request.
4. If the response from the admission desk is positive (a new session with an associated SVGA has been created), the SVL launches the SVC, configuring it with the information from the created session (including the session identifier and the communication port from the side of the SVGA).
5. During the initialization of the SVC, the communication port of the SVC is connected to the communication port of the SVGA.
6. If the connection is successful, the SVGA will begin its interaction with the SVC and the generation of synthetic video. Otherwise, the SVC will terminate its execution.
7. If the connection between the communication ports of the SVGA and the SVC is broken after the generation of synthetic video begins (for example, because the SVGA terminates its execution in a normal or abnormal manner), the SVC will terminate its execution.

### Brief description of the drawings

Next, in order to facilitate the comprehension of the invention, the embodiment of the invention referring to the following figures shall be described in an illustrative rather than limitative manner.
**Figure 1** shows the global architecture of the invention in a schematic manner, divided into the four main blocks (Control System, Synthetic Video Generation Cluster, TV Distribution Platform, and Client), as well as its components.
**Figure 2** shows the structure of a Synthetic Video Generation Application (SVGA), deployed in a node of the cluster, and its relationship with the other components of the system in a schematic manner.

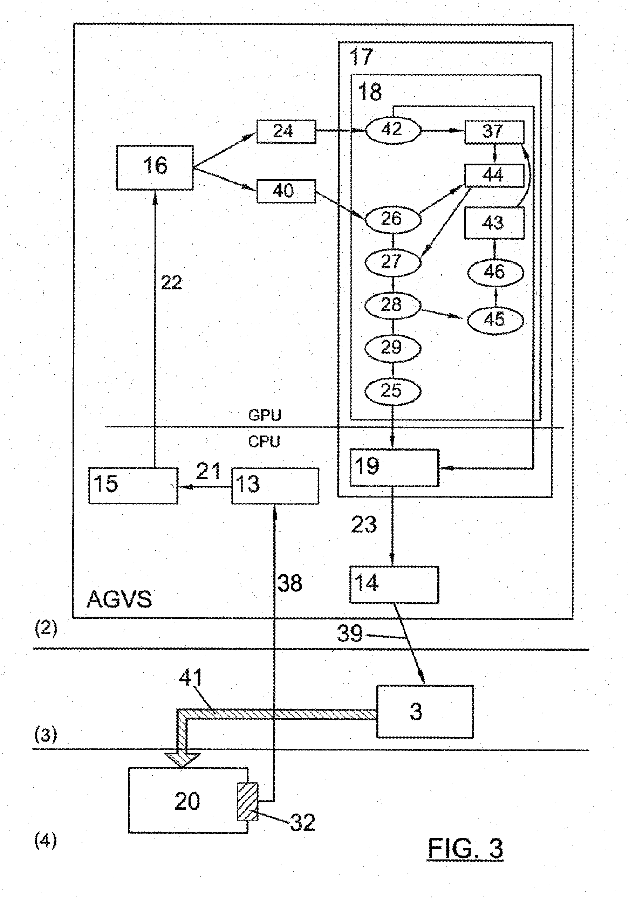

**Figure 3** shows the structure of the Video Coder system, with the tasks composing the same broken down, and its relationship with the other components of the system in a schematic manner.
**Figure 4** shows several examples of physical deployments or embodiments of the invention.

### Detailed description of an embodiment

**Figure 4a** shows an embodiment wherein the invention is deployed in the television network of a digital cable operator to remotely generate the graphic interface of the interactive applications shown by the operator to its users (menu of options, catalogues, etc.).

There is more than one physical control node (47) in the television headend of the operator, wherein the replicated components of the Control System (1) are deployed. The information of each one of the instances of the Control System (1) is kept replicated in a coherent manner. The SVL (31) can be freely connected to any admission desk (5) of each one of the replicas (for example, selecting one in a random manner). If a physical control node (47) fails, the admission system is still available in the rest of the replicated physical control nodes (47).

There are one or more processing nodes (N₁, N₂..., Nₘ) of the Synthetic Video Generation Cluster (2), each one of which is executing zero or more synthetic video generation applications N₁ (SVGA₁₁, SVGA_{12,...}, SVGA₁ₙ), N₂ (SVGA₂₁, SVGA_{22,...}, SVGA₂ₙ)) ...and Nₘ (SVGAₘ₁, SVGA_{m2,...}, SVGAₘₙ), where the first sub-index indicates the node and the second indicates the SVGA number. The synthetic video generation applications (SVGA) are dynamically started and stopped under the control of the Control System (1), as necessary to respond to the instantaneous load.

Special attention is given to the importance of distributing the computing power, the GPU coding, and the cost per user in the system.

The processing nodes (N₁...Nₘ) of the Synthetic Video Generation Cluster (2) deliver the coded video as MPEG-2 or H.264 to the data network of the television headend (51) in the form of an MPEG Single Program Transport Stream (SPTS) wrapped on multicast UDP datagrams. A series of QAM multiplexers/modulators with IP input subscribed to these multicast groups are located in the television headend and created, with them, MPEG Multiple Program Transport Streams (MPTS) in the form of QAM-modulated radiofrequency signals (Quadrature Amplitude Modulation).

The television distribution network (52) operates in a transparent manner between this point and the set-top box, delivering the signal coming from the invention to the same, along with the other conventional cable services (television channels, radio, Internet access, etc.).

There is a very simple local interactive application installed in each user set-top box, which implements the SVL (31) and the SVC (20). The SVL (31) logs in (35) to the system, and the SVC (20) decodes the received video (tuning and demultiplexing it as any other digital cable television channel), while sending the key pressing of the remote control to the synthetic video generation application (SVGA) to interact with it.

The interconnection of elements is carried out according to the following scheme:
- The SVL (31) has access to the service access data network (48) wherein the Control System (1) replicas are found.
- Each replica of the Control System (1) and the processing nodes (N₁...Nₘ) of the Synthetic Video Generation Cluster (2) is found in the same data network (49).
- The SVC (20) and the processing nodes (N₁...Nₘ) of the Synthetic Video Generation Cluster (2) communicate by means of a data network (50), preferably a low-latency one.
- The television distribution platform (3) and the processing nodes (N₁...Nₘ) of the Synthetic Video Generation Cluster (2) are found in the same data network (51), preferable a high-bandwidth one.
- The television distribution platform (3) and the SVC (20) have access to the same Television distribution network (52).

For simplicity and cost reasons, not all of the data networks (48, 49, 50, 51 and 52) have to be independent.

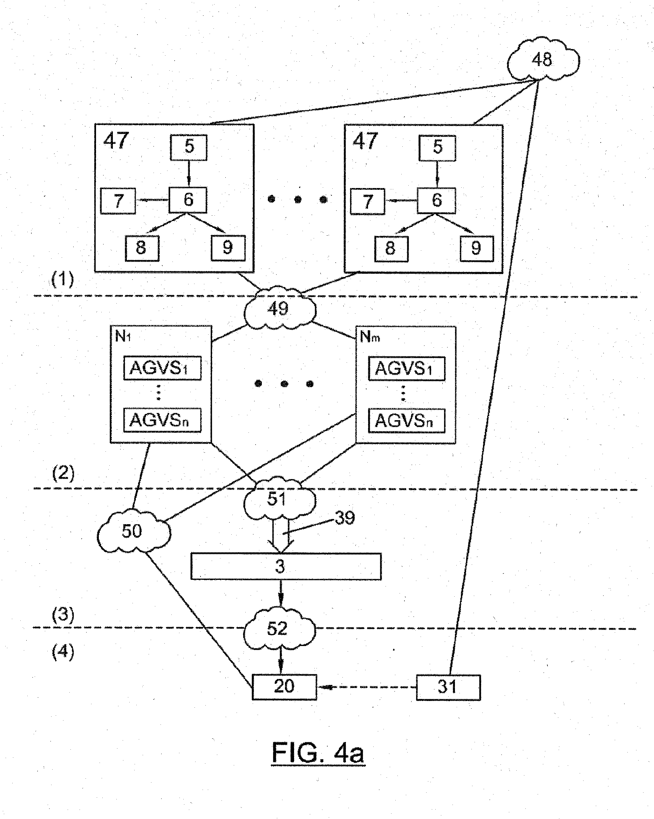

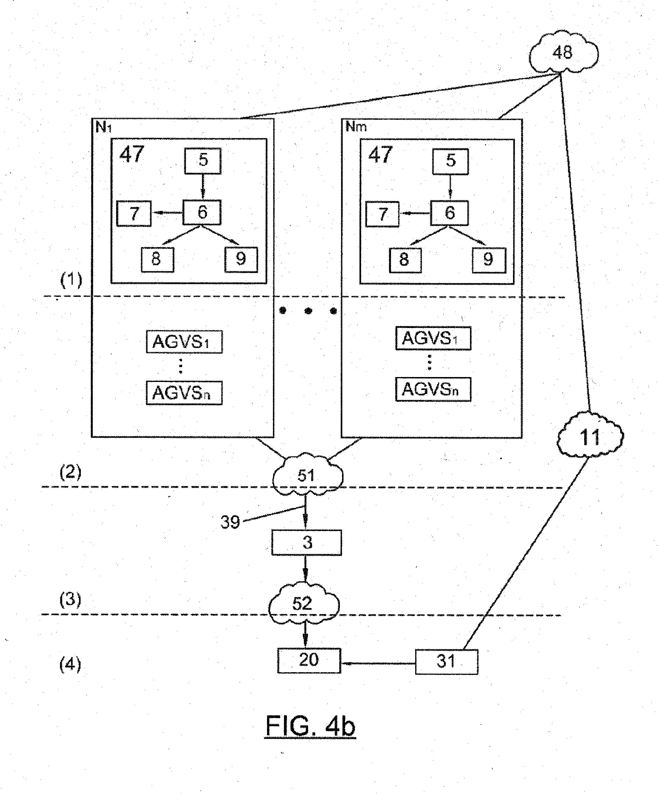

**Figure 4b** shows an embodiment wherein the invention is used to offer an interactive 3D navigation system on a display of the terrain of a region for shared access in a cooperative manner using ground digital television (DVB-T) by means of interactions using short text messages (SMS). Even though the application described above is MPEG-2-based, the architecture of the system and the techniques developed herein are easily applicable to other standards, such as H.264.

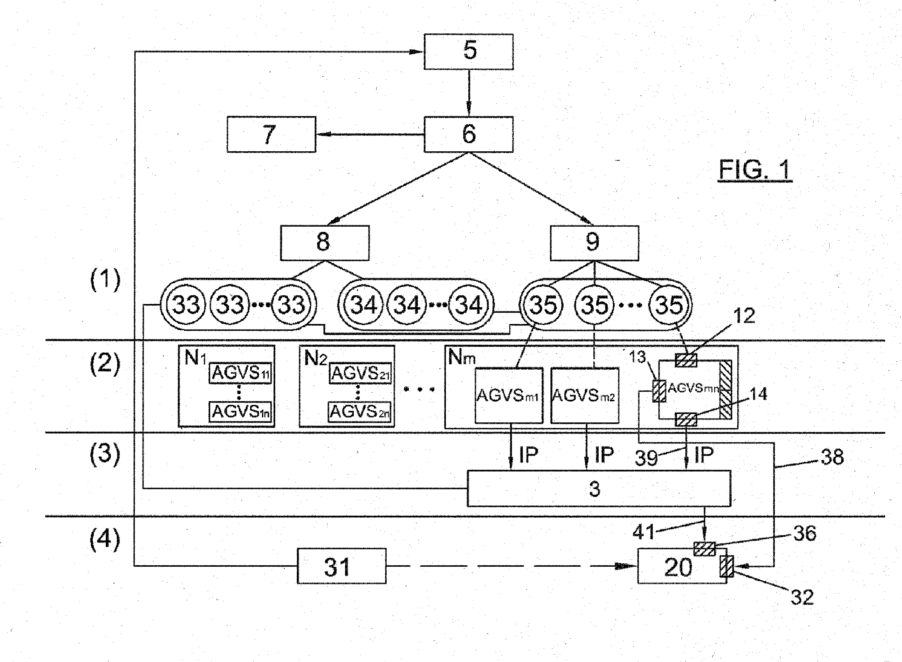

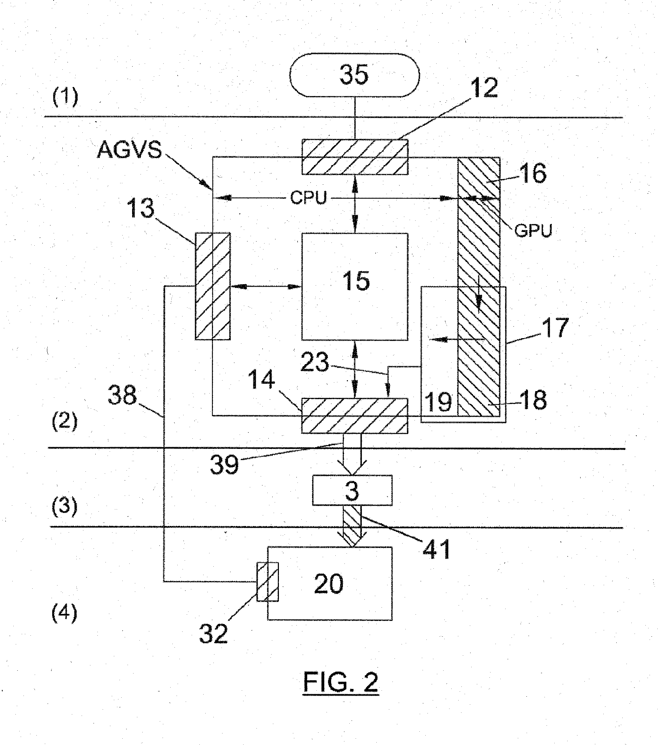

This navigation system consists of an interactive display of an aerial view of a certain region with additional geolocation information, such as the state of traffic, weather information, etc. A terrain display engine used as the interactive synthetic video generation application (SVGA) is in charge of the generation of the images. This application (SVGA) is executed in one of the processing nodes (N₁...Nₘ) indicated in figure 1 and receives the orders from the client module (4) as shown in **figures 1** **and** **2****.**

This embodiment offers a bird's view terrain display for the users; the channel is a shared-access channel (received by several users) and may be interacted with by using short messages (SMS). The video channel will show the flight images generated by the terrain display engine to all users. At a certain point we will visit a specific place or go along a specific route. The users can send requests through SMS indicating the destination or route to be selected. These requests are queued in the system such that they are served in the order they arrive. There will be additional information superimposed on the display screen about the current route, the following requests, and the total number of requests. Each request is allocated a number that identifies it in an unequivocal manner, such that the users can know the approximate time when their requests will be answered.

In this embodiment, the Control System (1) is deployed in one or more of the processing nodes (N₁, N₂... Nₘ) of the Synthetic Video Generation Cluster (2), which now perform a double function (video generation and control).

The information of each one of the instances of the Control System (1) is replicated in a coherent manner.

In this embodiment, the SVGA is executed continuously. The SVL (31) consists of an SMS reception gateway, which receives the requests of the users and sends them to the SVGA through the Admission Desk (5). The SVL (31) can be freely connected to any Admission Desk (5) of each one of the replicas (for example, selecting one in a random manner). If a physical control node (47) fails, the admission system remains available in the rest of the replicated physical control nodes (47).

There are one or more processing nodes (N₁, N₂... Nₘ) of the Synthetic Video Generation Cluster (2), each one of which is executing zero or more synthetic video generation applications N₁ (SVGA₁₁, SVGA_{12,...}, SVGA₁ₙ), N₂ (SVGA₂₁, SVGA_{22,...}, SVGA₂ₙ), ...and Nₘ (SVGAₘ₁, SVGA_{m2,...}, SVGAₘₙ), where the first sub-index indicates the node and the second indicates the SVGA number. In this case, the Control System (1) makes sure that at least one synthetic video generation application (SVGA) is always in operation.

The interconnection of the elements is carried out as follows:
- The SVL (31) has access to a data network (48) through a non-controlled, unknown data network (11), typically the Internet, wherein the processing nodes (N₁, N₂... Nₘ) of the Synthetic Video Generation Cluster (2) are located.
- The television distribution platform (3) and the processing nodes (N) of the Synthetic Video Generation Cluster (2) are found in the same data network (51), preferably a high-bandwidth one.
- The television distribution platform (3) sends the generated services to the SVC (20) by means of the Television distribution network (52).

Finally, the synthetic digital television channel generation system comprises the following:
- A control system (1) configured to manage the generation of synthetic digital television channels (41) and the resources associated with said synthetic channels (41).
- A synthetic video generation cluster (2) configured to, by means of at least one graphic processing unit, generate frames and code said frames to digital video in real time based on a plurality of orders (21) received from the client module (4), wrap the coded frames, and transmit the obtained coded elemental video stream (23) to a television distribution platform (3);
- The television distribution platform (3) configured to receive and transform the coded elemental video stream (23) to the physical means of broadcasting used by synthetic digital television channels (41) in the communication of the television distribution platform (3) with the client module (4):
- A client module (4) configured to interact with the user of the system by sending orders (21) to the system, said orders comprising sending requests for new synthetic digital television channels (41), and receiving and decoding synthetic digital television channels (41), delivered by the television distribution platform (3).

Preferably, the control system (1) comprises the following:
- An admission desk (5) that receives requests for new synthetic digital television channels (41) and reconnections coming from the client module (4), transforms said requests into the previously established internal communications format, and directs them to the admission manager (6);
- An admission manager (6) that manages the requests received from the admission desk (5) and communicates with an authorization and accounting manager (7) to verify if the client has access to the requested channel (41) and to register its use for subsequent billing purposes, with a resource manager (8) to reserve the resources necessary to serve the application specified by the client, and with a session manager (9) to create a new session for the client with the allocation of reserved resources and to locate a previously created session in a reconnection;

- An authorization and accounting manager (7) that authenticates and authorizes the user, based on predefined criteria, and records the authorized and denied accesses;
- A resource manager (8) that manages and availability and allocation of resources for the creation of a new channel (41);
- A session manager (9) that launches and supervises a synthetic video generation application (SVGA) in charge of generating, in each session (35) established, the frames depending on the orders (21) received from the client module (4), of transforming them into a digital video stream to be used by the television distribution platform (3), and releasing the resources allocated to said application (SVGA) upon the termination of its execution.

Preferably, the requests received by the admission desk (5) comprise the identity of the client and the identifier of the application that will lead to the requested synthetic digital television channel (41).

Preferably, the resources managed by the resource manager (8) comprise partnerships (33) between a synthetic digital television channel (41) and an SVGA-television distribution platform communication channel (39), wherein the digital video stream is delivered to the television distribution platform (3), and to processing units (34), in charge of generating and coding the video streams coming from a plurality of orders (21), received from the client module (4), in real time.

Preferably, the synthetic video generation cluster (2) comprises a plurality of processing nodes (N), interconnected to one another, to the control system (1), and to the television distribution platform (3), where a synthetic video generation application (SVGA) is executed in each one of the processing nodes (N) in each active session (35) of the processing node (N), each application (SVGA) comprising the following:
- A control system interaction controller (12) that manages the communications between the session manager (9) and the synthetic video generation application (SVGA);
- A client communication port controller (13) that manages the communications with the synthetic video client (SVC) (20), in charge of the decoding and display of the video generated by the synthetic video generation cluster (2), distributed through the television distribution platform (3), and the sending of user orders (21) to a specific logic module of the SVGA (15), in charge of defining the drawing orders (22) to generate each one of the frames (40) of the video;

- A video stream wrapper (14) that wraps the coded elemental video streams (23), coded by a video coder (17), and sends them through the SVGA-television distribution platform communication channel (39) to the television distribution platform (3); .
- A specific logic module of the SVGA (15) that defines and sends the drawing orders (22) in real time to the frame renderer (16) based on the user orders (21) received from the client communication port controller (13);
- A frame renderer (16) that receives the drawing orders (22) provided by the specific logic module of the SVGA (15) and generates the frames (40) making up the synthetic digital television channel (41) in real time;
- A video coder (17) that receives the frames (40) and the vectors of movement per pixel (24) generated by the frame renderer (16), generates the coded elemental video streams (23) with the pre-established format, and sends said elemental streams (23) to the television distribution platform (3).

Preferably, the processing nodes (N) comprise at least one central processing unit (CPU) and at least one graphic processing unit (GPU).

Preferably, the client communication port controller (13) defines an SVGA-SVC communication channel (38) on which the orders are broadcast from the SVC (20) to the SVGA (15) and events are broadcast from the SVGA (15) to the SVC (20).

Preferably, the sending of drawing orders (22) from the specific logic module of the SVGA (15) to the frame renderer (16) uses a low-level API.

Preferably, the video coder (17) comprises the following:
- A block coder (18) configured to code, in real time, the blocks of pixels of the frames (40) generated by the frame renderer (16) in the graphic processing unit (GPU), comprising:
   - dividing each frame (40) received by the frame renderer (16) into the blocks of nxn pixels established in the pre-established video standard;
      For each block of nxn pixels:
   - converting (26) the blocks from the RGB space into the YUV space;
   - applying the discrete cosine transformation (27);
   - quantizing (28) the coefficients obtained after the discrete cosine transformation (27);
   - reordering (29) the quantized coefficients comprising the determination of the repetitions of the reordered coefficients;
   - coding (25) the pairs formed by the reordered coefficients and the repetitions thereof by means of the coding algorithm pre-established by the selected video standard;
   - storing the previous coding in a GPU memory;
- A frame composer (19) located in the CPU that receives, for each block of nxn pixels, the bit streams generated by the block coder (18), assembles them by adding a predefined headend, and forms the coded elemental video stream (23) sent to the video stream wrapper (14).

Preferably, if the frames (40) are coded in a predictive manner, the frame renderer (16) is configured to calculate the vectors of movement per pixel (24) and to store the same in a GPU memory buffer.

Preferably, if the frames (40) are coded in a predictive manner, the frame renderer (16) comprises calculating a vector of movement per each vertex of each object present in the frame and interpolating said vectors of movement per vertex for all the pixels of the objects present in the frame during the calculation of the vectors of movement per pixel (24).

Preferably, if the frames (40) are coded in a predictive manner, the block coder (18) is configured to carry out the following in the graphic processing unit (GPU):
- dividing each frame (40) received by the frame renderer (16), in the blocks of nxn pixels established by the pre-established video standard;
   for each block of nxn pixels:
- converting (26) the blocks from the RBG space into the YUV space;
- obtaining the vectors of movement per block (42) of pixels, convoluting the vectors of movement per pixel (24);
- carrying out the movement compensation (37) by applying the vectors of movement per block (42) to the preceding frame (43);
- calculating the difference between the pixels (44) of the current frame converted into the YUV space (26) and the pixels of the preceding frame (43) after carrying out the movement compensation (37);
- applying the discrete cosine transformation (27) on the difference between the pixels (44);
- quantizing (28) the coefficients obtained after the discrete cosine transformation (27);
- quantizing the quantized coefficients in an inverse manner (45);
- applying the discrete cosine transformation (46) in an inverse manner to the quantized coefficients;
- storing the discrete cosine transformation (46) in an inverse manner as the preceding frame (43);
- reordering (29) the quantized coefficients comprising the determination of the repetitions of zeroes in the reordered coefficients and the generation of a run-level pair sequence.
- coding (25) the run-level pair sequence by means of coding algorithm pre-established by the selected video standard;
- storing the previous coding in a GPU memory.

Preferably, the reordering of quantized coefficients comprises the following:
- dividing the quantized coefficients, according to the path order pre-established by the applied video standard, in an amount of sections with the same size than the number of executing threads processing the block of nxn pixels which coefficients are being reordered; in each section:
- calculating the final repetition of the section as the number of adjacent zero-value coefficients present at the end of the section;
- storing the final calculated repetition in a memory buffer accessible by all the sections;
- calculating the initial repetition of the section as the final repetition of the previously analyzed section, the first section being zero;
- if the final repetition of the previously analyzed section is equal to the number of coefficients per section, the final repetition values of the previous sections are added until reaching a section which final repetition value is lower than the number of coefficients per section or until the first section is reached.

Preferably, the resource manager (8) manages partnerships (33) that link the SVGA-television distribution platform communication channel (39) to a synthetic digital television channel (41), said partnerships (33) being allocated exclusively to each section (35) serving an SVC (20).

Preferably, the client module (4) comprises the following:
- a synthetic video launch (SVL) (31) that interacts with the admission desk (5) to request the creation of a new session (35) for a new synthetic digital television channel (41) and that launches the synthetic video client (20) with the configuration information communicated by the control system (1);
- a synthetic video client (20) that comprises the following:
   o an SVGA communication port controller (32) that defines a communication channel with the client of the synthetic video generation application (SVGA) on which orders are broadcast from the SVC (20) to the synthetic video generation application (SVGA), and events are broadcast from the synthetic video generation application (SVGA) to the SVC (20);
   o a decoder (36) that receives and decodes the synthetic digital television channels (41) coming from the television distribution platform (3).

After describing the invention in a clear manner, it should be noted that the particular embodiments described above are subject to detail changes as long as they not alter the essential principles of the invention.

## Claims

1. Synthetic digital television channel generation system, **characterized in that** it comprises:
• A control system (1) configured to manage the generation of synthetic digital television channels (41) and the resources associated with said synthetic channels (41).
• A synthetic video generation cluster (2) configured to, by means of at least one graphic processing unit, generate frames and code said frames to digital video in real time based on a plurality of orders (21) received from the client module (4), wrap the coded frames, and transmit the obtained coded elemental video stream (23) to a television distribution platform (3);
• The television distribution platform (3) configured to receive and transform the coded elemental video stream (23) to the physical means of broadcasting used by synthetic digital television channels (41) in the communication of the television distribution platform (3) with the client module (4):
• A client module (4) configured to interact with the user of the system by sending orders (21) to the system, said orders comprising sending requests for new synthetic digital television channels (41), and receiving and decoding synthetic digital television channels (41), delivered by the television distribution platform (3).

2. Synthetic digital television channel generation system according to claim 1, **characterized in that** the control system (1) comprises the following:
• An admission desk (5) that receives requests for new synthetic digital television channels (41) and reconnections coming from the client module (4), transforms said requests into the previously established internal communications format, and directs them to the admission manager (6);
• An admission manager (6) that manages the requests received from the admission desk (5) and communicates with an authorization and accounting manager (7) to verify if the client has access to the requested channel (41) and to register its use for subsequent billing purposes, with a resource manager (8) to reserve the resources necessary to serve the application specified by the client, and with a session manager (9) to create a new session for the client with the allocation of reserved resources and to locate a previously created session in a reconnection;
• An authorization and accounting manager (7) that authenticates and authorizes the user, based on predefined criteria, and records the authorized and denied accesses;
• A resource manager (8) that manages and availability and allocation of resources for the creation of a new channel (41);
• A session manager (9) that launches and supervises a synthetic video generation application (SVGA) in charge of generating, in each session (35) established, the frames depending on the orders (21) received from the client module (4), of transforming them into a digital video stream to be used by the television distribution platform (3), and releasing the resources allocated to said application (SVGA) upon the termination of its execution.

3. Synthetic digital television channel generation system according to claim 2, **characterized in that** the requests received by the admission desk (5) comprise the identity of the client and the identifier of the application that will lead to the requested synthetic digital television channel (41).

4. Synthetic digital television channel generation system according to any one of the claims 2-3, **characterized in that** the resources managed by the resource manager (8) comprise partnerships (33) between a Synthetic digital television channel (41) and an SVGA-television distribution platform communication channel (39), wherein the digital video stream is delivered to the television distribution platform (3), and to processing units (34), in charge of generating and coding the video streams coming from a plurality of orders (21), received from the client module (4), in real time.

5. Synthetic digital television channel generation system according to any one of the previous claims, **characterized in that** the synthetic video generation cluster (2) comprises a plurality of processing nodes (N), interconnected to one another, to the control system (1), and to the television distribution platform (3), where a synthetic video generation application (SVGA) is executed in each one of the processing nodes (N) in each active session (35) of the processing node (N), each application (SVGA) comprising the following:
• A control system interaction controller (12) that manages the communications between the session manager (9) and the synthetic video generation application (SVGA);
• A client communication port controller (13) that manages the communications with the synthetic video client (SVC) (20), in charge of the decoding and display of the video generated by the synthetic video generation cluster (2), distributed through the television distribution platform (3), and the sending of user orders (21) to a specific logic module of the synthetic video generation application (15), in charge of defining the drawing orders (22) to generate each one of the frames (40) of the video;
• A video stream wrapper (14) that wraps the coded elemental video streams (23), coded by a video coder (17), and sends them through the SVGA-television distribution platform communication channel (39) to the television distribution platform (3);
• A specific logic module of the synthetic video generation application (15) that defines and sends the drawing orders (22) in real time to the frame renderer (16) based on the user orders (21) received from the client communication port controller (13);
• A frame renderer (16) that receives the drawing orders (22) provided by the specific logic module of the synthetic video generation application (15) and generates the frames (40) making up the synthetic digital television channel (41) in real time;
• A video coder (17) that receives the frames (40) and the vectors of movement per pixel (24) generated by the frame renderer (16), generates the coded elemental video streams (23) with the pre-established format, and sends said elemental streams (23) to the television distribution platform (3).

6. Synthetic digital television channel generation system according to claim 5, **characterized in that** the processing nodes (N) comprise at least one central processing unit (CPU) and at least one graphic processing unit (GPU).

7. Synthetic digital television channel generation system according to any one of the claims 5-6, **characterized in that** the client communication port controller (13) defines an SVGA-SVC communication channel (38) on which the orders are broadcast from the synthetic video client (20) to the synthetic video generation application (15) and events are broadcast from the synthetic video generation application (15) to the synthetic video client (20).

8. Synthetic digital television channel generation system according to any one of the claims 5-7, **characterized in that** the sending of drawing orders (22) from the specific logic module of the synthetic video generation application (15) to the frame renderer (16) uses a low-level API.

9. Synthetic digital television channel generation system according to any one of the claims 5-8, **characterized in that** the video coder (17) comprises:
• A block coder (18) configured to code, in real time, the blocks of pixels of the frames (40) generated by the frame renderer (16) in the graphic processing unit, comprising:
- dividing each frame (40) received by the frame renderer (16) into the blocks of nxn pixels established in the pre-established video standard; For each block of nxn pixels:
- converting (26) the blocks from the RGB space into the YUV space;
- applying the discrete cosine transformation (27);
- quantizing (28) the coefficients obtained after the discrete cosine transformation (27);
- reordering (29) the quantized coefficients comprising the determination of the repetitions of the reordered coefficients;
- coding (25) the pairs formed by the reordered coefficients and the repetitions thereof by means of the coding algorithm pre-established by the selected video standard;
- storing the previous coding in a GPU memory;
• A frame composer (19) located in the central processing unit that receives, for each block of nxn pixels, the bit streams generated by the block coder (18), assembles them by adding a predefined headend, and forms the coded elemental video stream (23) sent to the video stream wrapper (14).

10. Synthetic digital television channel generation system according to any one of the claims 5 and 9, **characterized in that,** if the frames (40) are coded in a predictive manner, the frame renderer (16) is configured to calculate the vectors of movement per pixel (24) and to store the same in a graphic processing unit memory buffer.

11. Synthetic digital television channel generation system according to claim 10, **characterized in that,** if the frames (40) are coded in a predictive manner, the frame renderer (16) comprises calculating a vector of movement per each vertex of each object present in the frame and interpolating said vectors of movement per vertex for all the pixels of the objects present in the frame during the calculation of the vectors of movement per pixel (24).

12. Synthetic digital television channel generation system according to any one of the claims 10 and 11, **characterized in that,** if the frames (40) are coded in a predictive manner, the block coder (18) is configured to carry out the following in the graphic processing unit:
- dividing each frame (40) received by the frame renderer (16), in the blocks of nxn pixels established by the pre-established video standard;
for each block of nxn pixels:
- converting (26) the blocks from the RBG space into the YUV space;
- obtaining the vectors of movement per block (42) of pixels, convoluting the vectors of movement per pixel (24);
- carrying out the movement compensation (37) by applying the vectors of movement per block (42) to the preceding frame (43);
- calculating the difference between the pixels (44) of the current frame converted into the YUV space (26) and the pixels of the preceding frame (43) after carrying out the movement compensation (37);
- applying the discrete cosine transformation (27) on the difference between the pixels (44);
- quantizing (28) the coefficients obtained after the discrete cosine transformation (27);
- quantizing the quantized coefficients in an inverse manner (45);
- applying the discrete cosine transformation (46) in an inverse manner to the quantized coefficients;
- storing the discrete cosine transformation (46) in an inverse manner as the preceding frame (43);
- reordering (29) the quantized coefficients comprising the determination of the repetitions of zeroes in the reordered coefficients and the generation of a run-level pair sequence.
- coding (25) the run-level pair sequence by means of coding algorithm pre-established by the selected video standard;
- storing the previous coding in a graphic processing unit.

13. Synthetic digital television channel generation system according to any one of the claims 9-12, **characterized in that** the reordering of quantized coefficients comprises the following:
- dividing the quantized coefficients, according to the path order pre-established by the applied video standard, in an amount of sections with the same size than the number of executing threads processing the block of nxn pixels which coefficients are being reordered;
in each section:
- calculating the final repetition of the section as the number of adjacent zero-value coefficients present at the end of the section;
- storing the final calculated repetition in a memory buffer accessible by all the sections;
- calculating the initial repetition of the section as the final repetition of the previously analyzed section, the first section being zero;
- if the final repetition of the previously analyzed section is equal to the number of coefficients per section, the final repetition values of the previous sections are added until reaching a section which final repetition value is lower than the number of coefficients per section or until the first section is reached.

14. Synthetic digital television channel generation system according to any one of the claims 4 and 5, **characterized in that** the resource manager (8) manages partnerships (33) that link the SVGA-television distribution platform communication channel (39) to a synthetic digital television channel (41), said partnerships (33) being allocated exclusively to each section (35) serving an synthetic video client (20).

15. Synthetic digital television channel generation system according to any one of the claims 2 and 5, **characterized in that** the client module (4) comprises the following:
• a synthetic video launch (SVL) (31) that interacts with the admission desk (5) to request the creation of a new session (35) for a new synthetic digital television channel (41) and that launches the synthetic video client (20) with the configuration information communicated by the control system (1);
• a synthetic video client (20) that comprises the following:
○ an synthetic video generation application communication port controller (32) that defines a communication channel with the client of the synthetic video generation application (SVGA) on which orders are broadcast from the synthetic video client (20) to the synthetic video generation application (SVGA), and events are broadcast from the synthetic video generation application (SVGA) to the synthetic video client (20);
○ a decoder (36) that receives and decodes the synthetic digital television channels (41) coming from the television distribution platform (3).
